# EUROPÄISCHE PATENTSCHRIFT

(11) **EP 1 771 668 B1**
(45) Veröffentlichungstag und Bekanntmachung des Hinweises auf die Patenterteilung: **02.01.2008**
(21) Anmeldenummer: 05764149.0
(22) Anmeldetag: 21.07.2005
(51) Int. Cl.: F16D 3/84, F16D 3/223

(54) **GLEICHLAUFDREHGELENK MIT VORGESPANNTEM FALTENBALG**
CONSTANT VELOCITY JOINT WITH PRESTRESSED BELLOWS
JOINT TOURNANT HOMOCINETIQUE COMPRENANT UN SOUFFLET PRECONTRAINT

(30) Priorität: 28.07.2004 DE 102004036532
(43) Veröffentlichungstag der Anmeldung: 11.04.2007
(73) Patentinhaber: GKN Driveline Deutschland GmbH, 63073 Offenbach/Main 1 (DE)
(72) Erfinder: HARNISCHFEGER, Heiko, 36399 Freiensteinau-Weidenau (DE)
(74) Vertreter: Neumann, Ernst Dieter
(86) Internationale Anmeldenummer: PCT/EP2005/007941
(87) Internationale Veröffentlichungsnummer: WO 2006/013011

(56) Entgegenhaltungen:
- EP-A- 0 249 528
- US-A- 4 805 921
- US-B1- 6 244 967

## Beschreibung

Die Erfindung betrifft ein Gleichlaufdrehgelenk mit einem Gelenkaußenteil mit ersten Kugelbahnen, einem Gelenkinnenteil mit zweiten Kugelbahnen, in Paaren aus ersten und zweiten Kugelbahnen gehaltenen Kugeln und einem Kugelkäfig, der die Kugeln in Käfigfenstern in einer gemeinsamen Ebene hält, sowie einem Faltenbalg, der auf dem Gelenkaußenteil einerseits und einer mit dem Gelenkinnenteil verbundenen Welle andererseits zur Abdichtung des Gelenks festgelegt ist, wobei an dem Gelenk unter Drehmomentbelastung eine resultierende Axialkraft zwischen Gelenkinnenteil und Gelenkaußenteil entsteht, die sich am Gelenkaußenteil abstützt und als Kraft F_{KN} auf das Gelenkinnenteil einwirkt. Je nach Bahnform des Gleichlaufdrehgelenks kann die Kraft F_{KN} auf das Gelenkinnenteil zum Boden des Gelenkaußenteils oder zur Öffnung des Gelenkaußenteils gerichtet sein, wobei jeweils das Gelenkaußenteils als das Teil angesehen wird, das festgehalten ist und an dem sich die übrigen Teile abstützen. Der erstgenannte Fall trifft auf übliche Rzeppa-Gelenke (RF-Gelenke) und Gelenke mit hinterschnittfreien Kugelbahnen (UF-Gelenke) zu, bei denen sich die Paare aus ersten und zweiten Kugelbahnen vom Gelenkboden zur Gelenköffnung hin erweitern. Hierbei hat unter Drehmoment bei gestrecktem Gelenk aufgrund des Öffnungswinkels zwischen den Kugelbahnen im Bereich der Kugelkontakte, der sich vom Gelenkboden zur Gelenköffnung öffnet, der Kugelkäfig die Tendenz, sich zur Öffnung des Gelenkaußenteils zu verlagern, an dem er sich abstützt, während dadurch das Gelenkinnenteil die Tendenz hat, sich zum Gelenkboden zu verlagern. Dagegen ist bei Gelenken mit sogenannter S-Bahn bei gestrecktem Gelenk ein Öffnungswinkel zwischen ersten und zweiten Kugelbahnen im Bereich der Kugelkontakte vorherrschend, der sich von der Gelenköffnung zum Gelenkboden öffnet. Hierbei entsteht unter Drehmoment gegenüber dem festgehaltenen Gelenkaußenteil eine Tendenz des Kugelkäfigs, sich zum Gelenkboden zu verlagern, an dem es sich abstützt, während dadurch eine Tendenz des Gelenkinnenteils entsteht, sich zur Gelenköffnung zu verlagern. Die vorgenannten Aussagen gelten jeweils für das gestreckte, d. h. gerade ausgerichtete Gelenk mit übereinstimmenden Achsen von Gelenkaußenteil und Gelenkinnenteil.

Ein gattungsgemäßes Gleichlaufdrehgelenk ist aus US-B1-6,244,967 bekannt.

Bei bekannten Gelenken kommt es aufgrund innerer Kräfte zwischen den einzelnen Gelenkkomponenten in einzelnen Fällen zu einem Klemmen, wodurch Abwinkelbewegungen des Gelenks bzw. der Umlauf des Gelenks unter Winkelstellung behindert ist und Schäden am Gelenk entstehen können.

Der vorliegenden Erfindung liegt die Aufgabe zugrunde, ein Gelenk vorzuschlagen, bei dem Mittel zur Reduzierung der vorgenannten Erscheinungen eingesetzt sind. Die Lösung hierfür besteht in einem Gleichlaufdrehgelenk mit einem Gelenkaußenteil mit ersten Kugelbahnen, einem Gelenkinnenteil mit zweiten Kugelbahnen, in Paaren aus ersten und zweiten Kugelbahnen gehaltenen Kugeln und einem Kugelkäfig, der die Kugeln in Käfigfenstern in einer gemeinsamen Ebene hält, sowie einem Faltenbalg, der auf dem Gelenkaußenteil einerseits und einer mit dem Gelenkinnenteil verbundenen Welle andererseits zur Abdichtung des Gelenks festgelegt ist, wobei an dem Gelenk unter Drehmomentbelastung eine resultierende Axialkraft zwischen Gelenkinnenteil und Gelenkaußenteil entsteht, die sich am Gelenkaußenteil abstützt und als Kraft F_{KN} auf das Gelenkinnenteil einwirkt, bei welchem der Faltenbalg so eingebaut ist, daß eine Vorspannkraft zwischen Welle und Gelenkaußenteil entsteht, die sich am Gelenkaußenteil abstützt und als Vorspannkraft F_{FB} auf die Welle einwirkt und mit der Kraft F_{KN}, die auf das Gelenkinnenteil einwirkt, gleichgerichtet ist. Bei einem solchen erfindungsgemäßen Gelenk wird die von den Kugeln unter Drehmoment bewirkte zueinander entgegengesetzt gerichtete Mikroverschiebung von Kugelkäfig und Gelenkinnenteil relativ zum Gelenkaußenteil und damit voneinander weg nicht durch Störkräfte vom Faltenbalg beeinflußt, sondern vielmehr durch die auf die Welle einwirkende Vorspannkraft des Faltenbalgs verstärkt. Hiermit können die aufgrund innerer Kräfte zwischen den Gelenkkomponenten vorkommenden Klemmerscheinungen reduziert und vermieden werden. Die Vorspannung des sich am Gelenkaußenteil abstützenden Faltenbalgs wirkt also dabei in gleicher Richtung auf die Welle ein, wie die Druckkraft der am Kugelkäfig abgestützten Kugeln über die zweiten Kugelbahnen auf das Gelenkinnenteil.

In einer ersten bevorzugten Ausführungsform ist vorgesehen, daß unter Drehmoment eine zum Boden des Gelenkaußenteils gerichtete Axialkraft F_{KN} auf das Gelenkinnenteil einwirkt und daß die Vorspannkraft F_{FB} durch eine Zugvorspannung des Faltenbalgs erzeugt wird. Die Zugvorspannung des Faltenbalgs in Axialrichtung wird durch elastische Längsstreckung des Faltenbalgs in der Einbaulage gegenüber seiner Herstellungslänge im spannungsfreien Zustand erzielt. Die hiermit genannte Ausführungsform betrifft insbesondere die eingangs genannten RF-Gelenke und UF-Gelenke, bei denen die Paare aus ersten und zweiten Kugelbahnen sich am gestreckten Gelenk in der Ebene des Kugelkontaktes vom Gelenkboden zur Öffnung erweitern.

Nach einer zweiten Ausgestaltungsform ist vorgesehen, daß unter Drehmoment eine zur Öffnung des Gelenkaußenteils gerichtete Axialkraft F_{KN}' auf das Gelenkinnenteil einwirkt und daß die Vorspannkraft F_{FB} durch eine Druckvorspannung des Faltenbalgs erzeugt wird. Die Druckvorspannung des Faltenbalgs in Axialrichtung wird durch elastische Längsverkürzung des Faltenbalgs in der Einbaulage gegenüber seiner Herstellungslänge im spannungsfreien Zustand erzielt. Diese Ausführungsform betrifft Gelenke mit "umgekehrtem" Bahnverlauf, bei dem sich die Bahnpaare aus ersten und zweiten Kugelbahnen bei gestrecktem Gelenk in der Ebene des Kugelkontaktes von der Gelenköffnung zum Gelenkboden hin erweitern. Dies sind beispielhaft Gelenke mit vom Gelenkboden aus betrachtet hinterschnittfreien Kugelbahnen (UFI-Gelenke) oder S-Bahn-Gelenke.

Die Erfindung ist jedoch nicht auf spezielle Gelenke mit konkreten Bahnformen beschränkt, sondern erstreckt sich auf alle Gelenke, die einen Öffnungswinkel zwischen ersten und zweiten Kugelbahnen einschließen und damit resultierende Axialkräfte auf die Kugeln unter Drehmoment aufbauen, die durch die auf die Kugeln ausgeübten Axialkräfte den Kugelkäfig einerseits und das Gelenkinnenteil andererseits gegenüber dem Gelenkaußenteil zu verlagern versuchen.

Bevorzugte Ausführungsbeispiele der Erfindung werden nachstehend anhand der Zeichnungen unter Bezugnahme auf Gelenke nach dem Stand der Technik beschrieben.
Figur 1 zeigt ein UF-Gelenk nach dem Stand der Technik
   a) im Querschnitt,
   b) im Längsschnitt;
Figur 2 zeigt ein S-Bahn Gelenk nach dem Stand der Technik
   a) im Querschnitt,
   b) im Längsschnitt;
Figur 3 zeigt ein S-Bahn Gelenk mit Zwillingsbahnen nach dem Stand der Technik
   a) im Querschnitt,
   b) im Längsschnitt;
Figur 4 zeigt ein komplett montiertes UF-Gelenk gemäß der Erfindung;
Figur 5 zeigt ein komplett montiertes S-Bahn Gelenk gemäß der Erfindung.

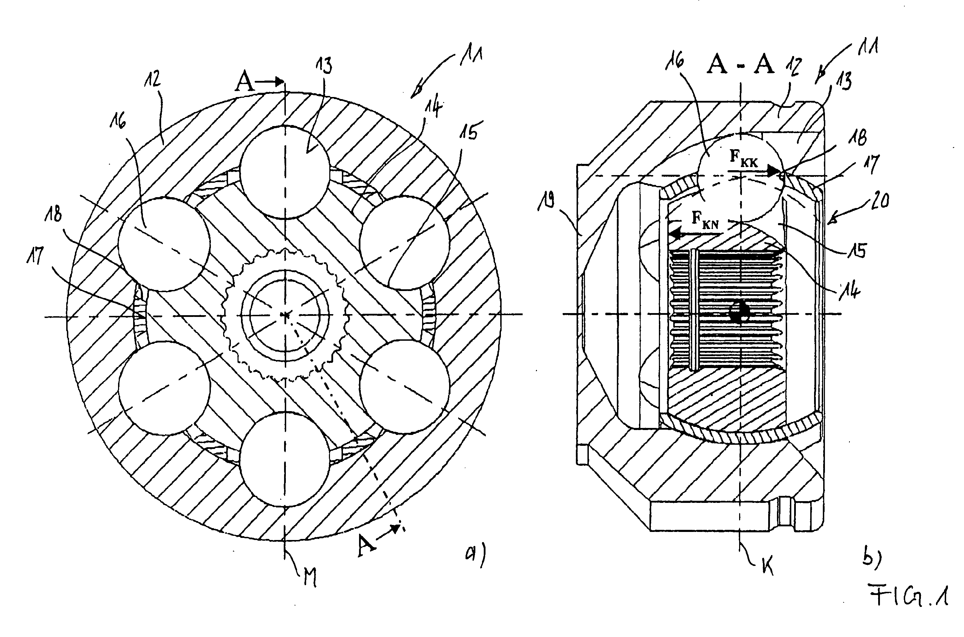

In Figur 1 ist ein UF-Gelenk 11 mit einem Gelenkaußenteil 12 mit sechs umfangsverteilten ersten Kugelbahnen 13 und einem Gelenkinnenteil 14 mit sechs umfangsverteilten zweiten Kugelbahnen 15 gezeigt. In Paaren aus ersten und zweiten Kugelbahnen 13, 15 sind jeweils drehmomentübertragende Kugeln 16 gehalten. Die Bahnen liegen jeweils in Meridianebenen M. Die Kugeln sind ihrerseits in einem Kugelkäfig 17 in einzelnen umfangsverteilten Käfigfenstern 18 gehalten, mit dem sie in einer gemeinsamen Ebene K gehalten werden. Am Gelenkaußenteil 12, das im weiteren als Bezugselement angesehen wird, sind ein Boden 19 und eine Gelenköffnung 20 identifiziert. Die Paare aus ersten und zweiten Kugelbahnen erweitern sich vom Boden 19 in Richtung zur Gelenköffnung 20. Bei Übertragung von Drehmoment wird relativ zum Gelenkaußenteil 12 mittels der Kugeln 16 auf den Kugelkäfig 17 eine resultierende Kraft F_{KK} in Richtung zur Öffnung 20 und auf das Gelenkinnenteil 14 (Kugelnabe) eine resultierende Kraft F_{KN} in Richtung zum Boden 19 ausgeübt.

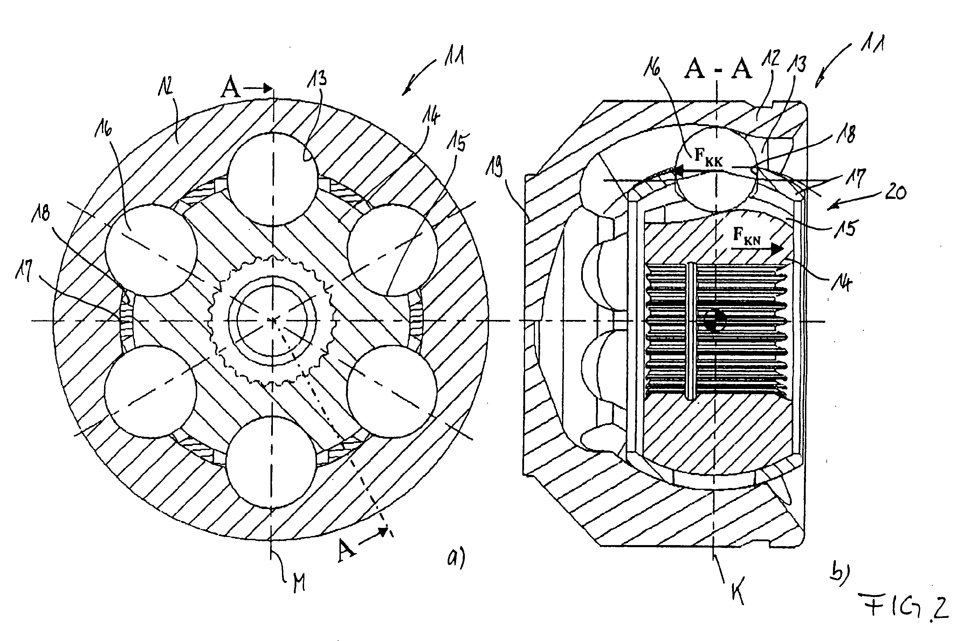

In Figur 2 ist ein S-Bahn-Gelenk 11 mit einem Gelenkaußenteil 12 mit sechs umfangsverteilten ersten Kugelbahnen 13 und einem Gelenkinnenteil 14 mit sechs umfangsverteilten zweiten Kugelbahnen 15 gezeigt. In Paaren aus ersten und zweiten Kugelbahnen 13, 15 sind jeweils drehmomentübertragende Kugeln 16 gehalten. Die Bahnen liegen jeweils in Meridianebenen M. Die Kugeln sind ihrerseits in einem Kugelkäfig 17 in einzelnen umfangsverteilten Käfigfenstern 18 gehalten, mit dem sie in einer gemeinsamen Ebene K gehalten werden. Am Gelenkaußenteil 12, das im weiteren als Bezugselement angesehen wird, sind ein Boden 19 und eine Gelenköffnung 20 identifiziert. Die Paare aus ersten und zweiten Kugelbahnen erweitern sich im Bereich der Kugelebene K von der Gelenköffnung 20 in Richtung zum Boden 19 und verlaufen insgesamt jeweils S-förmig. Bei Übertragung von Drehmoment wird relativ zum Gelenkaußenteil 12 mittels der Kugeln 16 auf den Kugelkäfig 17 eine resultierende Kraft F_{KK} in Richtung zum Boden 19 und auf das Gelenkinnenteil 14 (Kugelnabe) eine resultierende Kraft F_{KN} in Richtung zur Öffnung 20 ausgeübt.

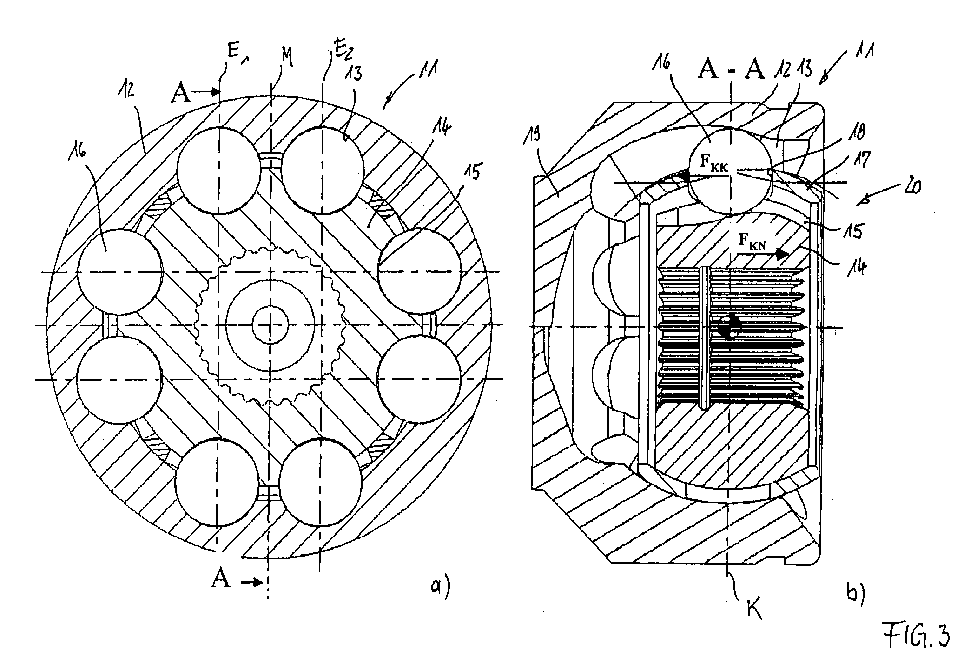

In Figur 3 ist ein S-Bahn Gelenk 11 mit einem Gelenkaußenteil 12 mit acht umfangsverteilten ersten Kugelbahnen 13 und einem Gelenkinnenteil 14 mit acht umfangsverteilten zweiten Kugelbahnen 15 gezeigt. In Paaren aus ersten und zweiten Kugelbahnen 13, 15 sind jeweils drehmomentübertragende Kugeln 16 gehalten. Die Bahnen liegen jeweils in Ebenen E₁, E₂, die paarweise parallel zu Meridianebenen M liegen. Die Kugeln sind ihrerseits paarweise in einem Kugelkäfig 17 in vier umfangsverteilten Käfigfenstern 18 gehalten, mit dem sie in einer gemeinsamen Ebene K gehalten werden. Am Gelenkaußenteil, das im weiteren als Bezugselement angesehen wird, sind ein Boden 19 und eine Gelenköffnung 20 identifiziert. Die Paare aus ersten und zweiten Kugelbahnen erweitern sich im Bereich der Kugelebene K von der Gelenköffnung 20 zum Boden 19 und verlaufen insgesamt jeweils S-förmig. Bei Übertragung von Drehmoment wird relativ zum Gelenkaußenteil 12 mittels der Kugeln 16 auf den Kugelkäfig eine resultierende Kraft F_{KK} in Richtung zum Boden 19 und auf das Gelenkinnenteil 14 (Kugelnabe) eine resultierende Kraft F_{KN} in Richtung zur Öffnung ausgeübt.

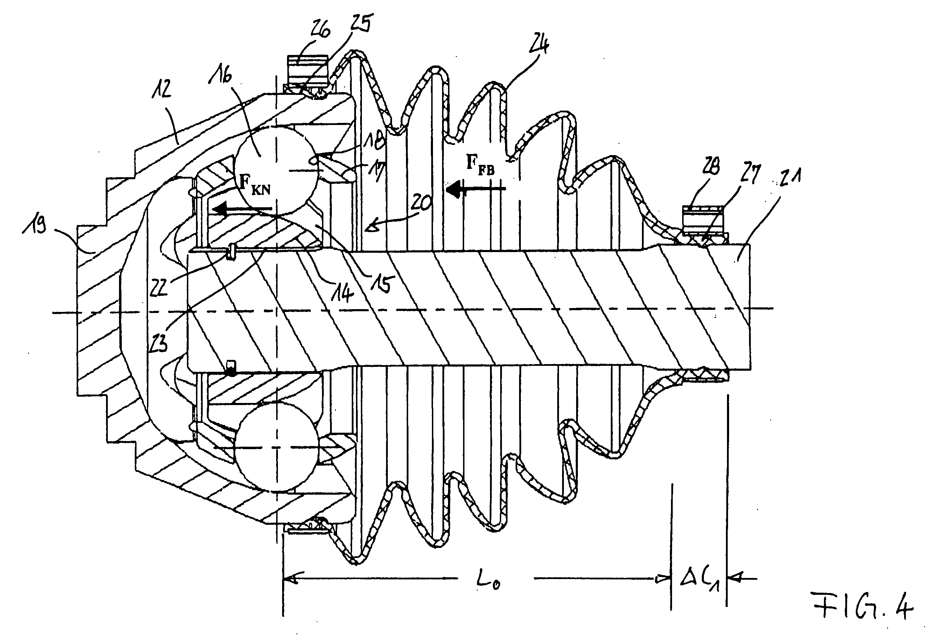

In Figur 4 ist ein Gelenk nach Figur 1b im Längsschnitt gezeigt, wobei in das Gelenkinnenteil eine Antriebswelle 21 eingesteckt und mittels eines Sicherungsringes 22 im Gelenkinnenteil 14 axial festgelegt. Mittels Wellenverzahnungen 23 ist ein drehmomentübertragender Eingriff hergestellt. Das Gelenk wird von einem Faltenbalg 24 nach außen abgedichtet, der mit einem ersten Bund 25 mittels eines Spannringes 26 auf dem Gelenkaußenteil 12 und mittels eines zweiten Bundes 27 mittels eines Spannbandes 28 auf der Welle 21 festgelegt ist. Bei Annahme des Gelenkaußenteils 12 als Abstütz- und Bezugselement ist wiederum die resultierende Kraft auf das Gelenkinnenteil 14 (Kugelnabe) F_{KN} mit einem ersten Pfeil gekennzeichnet, der zum Gelenkboden 19 hin weist. Mit einem in die gleiche Richtung weisenden Pfeil F_{FB} ist die resultierende Kraft eingezeichnet, die der Faltenbalg 24 auf die Welle 21 und damit ebenfalls auf das Gelenkinnenteil 14 (Kugelnabe) ausübt, die in die gleiche Richtung weist wie die erstgenannte Kraft F_{KN}. Der Faltenbalg 24 stützt sich hierbei ebenfalls am Gelenkaußenteil 12 ab und steht unter innerer axialer Zugvorspannung, da er gegenüber seinem spannungsfreien Herstellzustand (Länge L₀) in um die Länge ΔL₁ verlängertem, axial gestreckten Zustand verbaut ist.

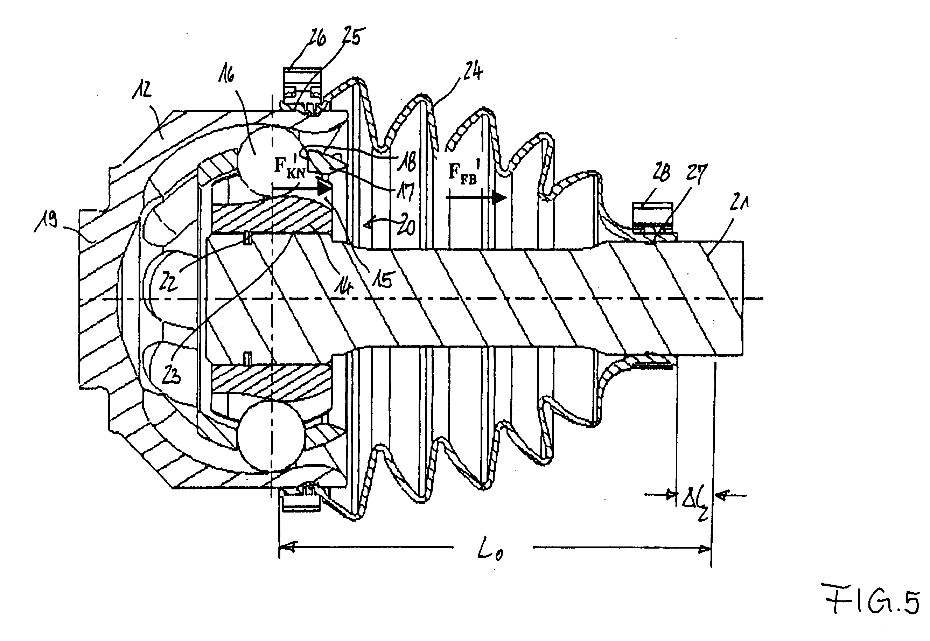

In Figur 5 ist ein Gelenk nach den Figuren 2b und 3b im Längsschnitt gezeigt, wobei in das Gelenkinnenteil eine Antriebswelle 21 eingesteckt und mittels eines Sicherungsringes 22 im Gelenkinnenteil 14 axial festgelegt. Mittels Wellenverzahnungen 23 ist ein drehmomentübertragender Eingriff hergestellt. Das Gelenk wird von einem Faltenbalg 24 nach außen abgedichtet, der mit einem ersten Bund 25 mittels eines Spannringes 26 auf dem Gelenkaußenteil 12 und mittels eines zweiten Bundes 27 mittels eines Spannbandes 28 auf der Welle 21 festgelegt ist. Bei Annahme des Gelenkaußenteils 12 als Abstütz- und Bezugselement ist wiederum die resultierende Kraft auf das Gelenkinnenteil 14 (Kugelnabe) F_{KN}' mit einem ersten Pfeil gekennzeichnet, der zur Gelenköffnung 20 hin weist. Mit einem in die gleiche Richtung weisenden Pfeil F_{FB}' ist die resultierende Kraft eingezeichnet, die der Faltenbalg 24 auf die Welle 21 und damit ebenfalls auf das Gelenkinnenteil 14 (Kugelnabe) ausübt, die in die gleiche Richtung weist wie die erstgenannte Kraft F_{KN}'. Der Faltenbalg stützt sich hierbei ebenfalls am Gelenkaußenteil 12 ab und steht unter innerer axialer Druckvorspannung, da er gegenüber einem spannungsfreien Herstellzustand (Länge Lo) in um die Länge ΔL₂ axial verkürztem Zustand verbaut ist.

### Bezugszeichenliste

- 11: Gelenk
- 12: Gelenkaußenteil
- 13: erste Kugelbahnen
- 14: Gelenkinnenteil
- 15: zweite Kugelbahnen
- 16: Kugeln
- 17: Kugelkäfig
- 18: Käfigfenster
- 19: Gelenkboden
- 20: Gelenköffnung
- 21: Welle
- 22: Sicherungsring
- 23: Wellenverzahnungen
- 24: Faltenbalg
- 25: Bund
- 26: Sicherungsring
- 27: Bund
- 28: Sicherungsring

## Patentansprüche

1. Gleichlaufdrehgelenk (11) mit einem Gelenkaußenteil (12) mit ersten Kugelbahnen (13), einem Gelenkinnenteil (14) mit zweiten Kugelbahnen (15), in Paaren aus ersten und zweiten Kugelbahnen gehaltenen Kugeln (16) und einem Kugelkäfig (17), der die Kugeln (16) in Käfigfenstern (18) in einer gemeinsamen Ebene hält, sowie einem Faltenbalg (24), der auf dem Gelenkaußenteil (12) einerseits und einer mit dem Gelenkinnenteil (14) verbundenen Welle (21) andererseits zur Abdichtung des Gelenks (11) festgelegt ist, wobei an dem Gelenk unter Drehmomentbelastung eine resultierende Axialkraft zwischen Gelenkinnenteil (14) und Gelenkaußenteil (12) entsteht, die sich am Gelenkaußenteil (12) abstützt und als Kraft F_{KN} auf das Gelenkinnenteil (12) einwirkt,
**dadurch gekennzeichnet,**
**daß** der Faltenbalg (24) so eingebaut ist, daß eine Vorspannkraft zwischen Welle (21) und Gelenkaußenteil (12) entsteht, die sich am Gelenkaußenteil (12) abstützt und als Vorspannkraft F_{FB} auf die Welle (21) einwirkt und die mit der Kraft F_{KN}, die auf das Gelenkinnenteil (14) einwirkt, gleichgerichtet ist.

2. Gelenk nach Anspruch 1,
**dadurch gekennzeichnet,**
**daß** unter Drehmoment eine zum Boden (19) des Gelenkaußenteils (12) gerichtete Axialkraft F_{KN} auf das Gelenkinnenteil (14) einwirkt und daß die Vorspannkraft F_{FB} durch eine Zugvorspannung des Faltenbalgs (24) erzeugt wird.

3. Gelenk nach Anspruch 2,
**dadurch gekennzeichnet,**
**daß** die Zugvorspannung des Faltenbalgs (24) durch elastische Streckung des eingebauten Faltenbalgs erzeugt wird.

4. Gelenk nach Anspruch 1,
**dadurch gekennzeichnet,**
**daß** unter Drehmoment eine zur Öffnung (20) des Gelenkaußenteils (12) gerichtete Axialkraft F_{KN}' auf das Gelenkinnenteil (14) einwirkt und daß die Vorspannkraft F_{FB} durch eine Druckvorspannung des Faltenbalgs (24) erzeugt wird.

5. Gelenk nach Anspruch 4,
**dadurch gekennzeichnet,**
**daß** die Druckvorspannung des Faltenbalgs (24) durch elastische Verkürzung des eingebauten Faltenbalgs erzeugt wird.

## Claims

1. A constant velocity universal joint (11) having an outer joint part (12) with first ball tracks (13), an inner joint part (14) with second ball tracks (15), balls (16) held in pairs of first and second ball tracks and a ball cage (17) which holds the balls (16) in cage windows (18) in a common plane, as well as a convoluted boot (24) which is secured on the outer joint part (12) on the one hand and on a shaft (21) connected to the inner joint part (14) on the other hand for the purpose of sealing the joint (11), wherein the joint, when under torque load, is subjected to a resulting axial force between the inner joint part (14) and the outer joint part (12), which axial force is supported on the outer joint part (12) and acts as force F_{KN} on the inner joint part (14),
**characterised in**
**that** the convoluted boot (24) is fitted in such a way that there is generated a pretensioning force between the shaft (21) and the outer joint part (12), which pretensioning force is supported on the outer joint part (12) and, in the form of the pretensioning force F_{FB}, acts on the shaft (21) and which is acting in the same direction as the force F_{KN} acting on the inner joint part (14).

2. A joint according to claim 1,
**characterised in**
**that**, under torque conditions, an axial force F_{KN} which is directed towards the base (19) of the outer joint part (12) acts on the inner joint part (14) and that the pretensioning force F_{FB} is generated by a tensile pretensioning force of the convoluted boot (24).

3. A joint according to claim 2,
**characterised in**
**that** the tensile pretensioning force of the convoluted boot (24) is generated in that the fitted convoluted boot is elastically elongated.

4. A joint according to claim 1,
**characterised in**
**that**, under torque conditions, an axial force F_{KN}' which is directed towards the aperture (20) of the outer joint part (12) acts on the inner joint part (14) and that the pretensioning force F_{FB} is generated by a compressive pretensioning force of the convoluted boot (24).

5. A joint according to claim 4,
**characterised in**
**that** the compressive pretension of the convoluted boot (24) is generated in that the fitted convoluted boot is elastically shortened.

## Revendications

1. Joint tournant homocinécique (11) comprenant une partie de joint extérieure (12) présentant des premiers chemins de bille (13), une partie de joint intérieure (14) présentant des deuxièmes chemins de bille (15), des billes (16) maintenues dans des paires de premiers et de deuxièmes chemins de bille, et une cage à billes (17) qui maintient dans un plan commun les billes (16) dans des fenêtres de cage (18), ainsi qu'un soufflet (24) qui est fixé d'un côté sur la partie de joint extérieure (12) et de l'autre côté sur un arbre (21) relié à la partie de joint intérieure (14), pour assurer l'étanchéité du joint tournant (11), joint tournant dans lequel, sous sollicitation par un couple, il apparaît entre la partie de joint intérieure (14) et la partie de joint extérieure (12), une force axiale résultante, qui est reprise ou prend appui sur la partie de joint extérieure (12) et agit en tant que force F_{KN} sur la partie de joint intérieure (14),
**caractérisé en ce que** le soufflet (24) est implanté de façon qu'il apparaisse entre l'arbre (21) et la partie de joint extérieure (12), une force de précontrainte qui est reprise ou prend appui sur la partie de joint extérieure (12) et agit en tant que force de précontrainte F_{FB} sur l'arbre (21), et qui est de même direction que la force F_{KN} qui agit sur la partie de joint intérieure (14).

2. Joint tournant selon la revendication 1, **caractérisé en ce que** sous sollicitation par un couple, une force axiale F_{KN} dirigée vers le fond (19) de la partie de joint extérieure (12) agit sur la partie de joint intérieure (14), et **en ce que** la force de précontrainte F_{FB} est produite par une précontrainte de traction du soufflet (24).

3. Joint tournant selon la revendication 2, **caractérisé en ce que** la précontrainte de traction du soufflet (24) est produite par un allongement ou étirement élastique du soufflet implanté.

4. Joint tournant selon la revendication 1, **caractérisé en ce que** sous sollicitation par un couple, une force axiale F_{KN}' dirigée vers l'ouverture (20) de la partie de joint extérieure (12) agit sur la partie de joint intérieure (14), et **en ce que** la force de précontrainte F_{FB} est produite par une précontrainte de compression du soufflet (24).

5. Joint tournant selon la revendication 4, **caractérisé en ce que** la précontrainte de compression du soufflet (24) est produite par un raccourcissement élastique du soufflet implanté.
